# EUROPÄISCHE PATENTSCHRIFT

(11) **EP 0 840 838 B1**
(45) Veröffentlichungstag und Bekanntmachung des Hinweises auf die Patenterteilung: **17.03.1999**
(21) Anmeldenummer: 96922676.0
(22) Anmeldetag: 18.07.1996
(51) Int. Cl.: F01N 3/08, F01N 3/28, F01N 3/02, B01D 53/32

(54) **VERFAHREN UND VORRICHTUNG ZUR ZERLEGUNG VON STICKSTOFFOXIDEN IN ABGASEN VON VERBRENNUNGSMOTOREN**
PROCESS AND DEVICE FOR DECOMPOSITING NITROGEN OXIDES IN INTERNAL COMBUSTION ENGINE EXHAUST GASES
PROCEDE ET DISPOSITIF POUR LA DECOMPOSITION DES OXYDES D'AZOTE DANS LES GAZ D'ECHAPPEMENT DE MOTEURS A COMBUSTION INTERNE

(30) Priorität: 27.07.1995 AT 1285/95
(43) Veröffentlichungstag der Anmeldung: 13.05.1998
(73) Patentinhaber: Fleck, Carl Maria, Prof. Dr., 2391 Kaltenleutgeben (AT)
(72) Erfinder: Fleck, Carl Maria, Prof. Dr., 2391 Kaltenleutgeben (AT)
(74) Vertreter: Kliment, Peter, Dipl.-Ing.
(86) Internationale Anmeldenummer: AT9600127
(87) Internationale Veröffentlichungsnummer: WO9705369

(56) Entgegenhaltungen:
- WO-A-92/19361
- DE-A- 3 409 859
- DE-A- 4 339 611
- US-A- 3 755 120
- US-A- 4 657 738
- IEEE TRANSACTIONS ON INDUSTRY APPLICATIONS, Bd. 26, Nr. 3, 1.Mai 1990, Seiten 535-541, XP000148210 DINELLI G ET AL: "INDUSTRIAL EXPERIMENTS ON PULSE CORONA SIMULTANEOUS REMOVAL OF NOX AND SO2 FROM FLUE GAS"
- PATENT ABSTRACTS OF JAPAN vol. 13, no. 340 (M-857), 31.Juli 1989 & JP 01 117912 A (MAZDA), 10.Mai 1989,
- PATENT ABSTRACTS OF JAPAN vol. 12, no. 455 (C-548), 29.November 1988 & JP 63 182022 A (MITSUBISHI), 27.Juli 1988,

## Beschreibung

Die Erfindung betrifft ein Verfahren nach Oberbegriff des Anspruchs 1.

Die beiden wesentlichen Nachteile des Dieselmotors sind die Emission von Ruß und verschiedenen Stickstoffoxiden, kurz NOx genannt. Gibt es für Rußfilter bereits einige brauchbare Ansätze, so sind entsprechende Katalysatorsysteme zur Entstickung über erste Grundsatzarbeiten noch nicht gediehen. Der Grund dafür ist der hohe Sauerstoffgehalt der Abgase des modernen Dieselmotors, der je nach Fahrzustand zwischen 5% und 10% liegt. Da nun der Katalysator den Sauerstoff vom Stickstoffoxid nur auf ein anderes Molekül umlagern kann, versucht man z.B. Harnstoff oder durch Destillation von Dieseltreibstoff gewonnene Kohlenwasserstoffe in den Abgasstrang einzublasen. Kann das erstere bei dynamischen Fahrtzuständen zu sehr unschönen Gerüchen führen, so macht das zweitere den größten Vorteil des Dieselmotors, seinen geringen spezifischen Energieverbrauch, zunichte.

Obwohl die Stickstoffoxide bei Temperaturen unter 300°C bis 400°C thermodynamisch instabil sind, zerfallen sie nicht, da sie dazu eine Aktivierungsenergie brauchen, die je nach Temperatur und Anregungszustand des Stickstoffoxides etwa zwischen 0,1 eV und 0,3 eV pro Molekül liegt.

In der Ausgabe 26 May/June 1990, No. 3, von IEEE wird ein Verfahren beschrieben, daß NOₓ und SO₂ mittles freier Elektronen dissoziert. Dazu wird ein Abgasstrom durch einen Entladungsraum mit Elektroden geleitet. Durch die im Entladungsraum vorhandene Feldstärke kommt es zur Bildung von freien Elektronen, die dem vorhanden NOₓ die zut Dissoziation notwendige Aktivierungsenergie über einen Stoß liefert. Der Nachteil des dort beschriebenen Verfahrens ist das zu hohe Energiepotential der erzeugten freien Elektronen, das nicht nur eine Dissoziation der NOₓ und SO₂ Moleküle bewirkt, sondern auch der O₂ Moleküle, was unter anderem zur Bildung von sekundären Stickstoffoxiden und Ozon führt. Außerdem bewirkt das zu hohe Energiepotential der freien Elektronen eine Ionisation des Stickstoffs und des Sauerstoffs, was wiederum zur Ausbildung von sogenannten Streamern führt und in weiterer Folge zur Bildung von zusätzlichen freiein Elektronen im gesamten Entladungsraum mit hohem Energieniveau und damit zur Enstehung von Ozon und sekundären Stickstoffoxiden.

Erfindungsgemäß wird nun vorgeschlagen, daß nur an einem Teil der Begrenzungen des Entladungsraumes Elektronen erzeugt werden, daß im größen Teil dieses Entladungsraumes nach Berücksichtigung der Raumladung eine Feldstärke zwischen 5 kV/cm und 20 kV/cm, vorzugsweise zwischen 10 kV/cm und 15 kV/cm, erzeugt wird und daß durch Einstellung der Feldstärke im Entladungsraum die Elektronen eine Energie erhalten, welche hinreichend ist, um eine Dissoziation der Stickstoffoxide durchzuführen, ohne jedoch dabei den im Abgas enthaltenen molekularen Sauerstoff zu dissozieren.

Die Erfindungsidee beruht auf der Grundlage, daß dem Abgas eine gezielte Aktivierungsenergie in Form von Stößen mit Elektronen zugeführt wird. Bei der Erzeugung der Elektronen ist jedoch darauf Rücksicht zu nehmen, daß diese nicht eine Dissoziation und/oder Ionisation der Stickstoff- und Sauerstoffmoleküle im Entladungsraum bewirken.

Führt man diese Energie durch Elektronenstöße zu, so ist Vorsicht geboten, um nicht die Dissoziationsenergie von Sauerstoff zu erreichen, die bei normalem Druck und Temperatur 5,1 eV beträgt. Da das erste Ionisationspotential von Sauerstoff oder Stickstoff über 12 eV liegt, dürfen die zu den Elektronenstößen benötigten freien Elektronen durch das elektrische Feld nicht im Entladungsraum selbst, sondern nur an seinem Rand erzeugt werden, da es sonst erneut zur Bildung von Stickstoffoxiden durch Anlagerung der dissozierten Sauerstoffatome an die reichlich vorhandenen Stickstoffmoleküle kommen würde.

Vorzugsweise ist vorgesehen, daß das Abgas durch einen Entladungsraum geleitet wird, wobei die Temperatur des Abgases bei seiner Einleitung nicht mehr als 400°C, vorzugsweise nicht mehr als 300°C, beträgt, daß in diesem Entladungsraum oder zumindest an einem Teil seiner Begrenzung Elektronen erzeugt werden, daß im größten Teil dieses Entladungsraumes nach Berücksichtigung der Raumladung vorzugsweise pulsförmig eine Feldstärke zwischen 5 kV/cm und 20 kV/cm, vorzugsweise zwischen 10 kV/cm und 15 kV/cm, erzeugt wird und daß durch Einstellung der Feldstärke im Entladungsraum pro Kubikmeter durch den Entladungsraum geleiteten Abgases mindestens 1 Amperesekunde, vorzugsweise mehr als 3 Amperesekunden, Elektronen in diesem Entladungsraum erzeugt werden.

Dieser Verbrauch an elektrischer Leistung ist für einen vollkommenen Abbau des NOx bei jenen Dieselmotoren bemessen, die in Ermangelung eines Rußfilters eine Rußreduktion zu Gunsten einer höheren NOx-Produktion durchführen, und stellt für die autoerzeugende Industrie eine große Hemmwschwelle dar, müßte doch für diesen Zweck Batterie und Generator deutlich vergrößert werden, was erhebliche Mehrkosten verursacht und sich auf den spezifischen Treibstoffverbrauch auswirkt. Erfindungsgemäß wird daher vorgeschlagen, die elektrische Leistung am Plasmakatalysator so zu regeln, daß die jeweils gewählte elektrische Leistung der augenblicklichen Produktion oder der augenblicklich gewünschten Reduktion an NOx entspricht.

Die Information über die jeweilige NOx-Produktion und/oder notwendige NOx-Reduktion kann aus einem Kennlinienfeld genommen werden, daß sehr ähnlich jenem ist, nach dem Einspritzmenge oder Abgasrückführung bemessen werden. Im allgemeinen kann die Information sogar direkt aus diesem Kennlinienfeld erhalten werden, da Einspritzmenge pro Zeiteinheit ein gutes Maß für die Motorleistung darstellt und die Abgasrückführung ohnehin zur Reduktion des NOx stattfindet, also bei starker Produktion auch viel zurückgeführt wird.

Auch kann im Jahr 2000 mit großer Wahrscheinlichkeit gerechnet werden, daß auch ein funktionierender Dieselrußfilter zur Verfügung stehen wird, sodaß der Anteil an NOx auf Kosten des Rußes etwas reduziert werden kann. Daneben ist bei den modernen PKW- Dieselmotoren zur Erfüllung der neuen europäischen Norm des Jahres 2000 oft nur eine Reduktion des NOx je nach Größe des Wagens zwischen 30% und 60% notwendig, sodaß mit einem Bruchteil der oben angeführten Leistung ausgekommen werden kann.

Daher ergibt sich unter solchen Umständen erfindungsgemäß für das Denoxing ein effektiver spezifischer Leistungsbedarf von 0.2 Wh/m³, bis 2 Wh/m³, vorzugsweise 0,5 Wh/m³ bis 1 Wh/m³, abhängig von der absoluten NOx-Konzentration und der Temperatur des Abgases und entspricht etwa einem absoluten Denoxing-Wirkungsgrad von 100 g NOx/kWh bis 200 g NOx/kWh. Damit kann bei einem modernen Diesel-PKW, wie etwa dem BMW 318 tds mit 4 Zylindern und 2 Liter Hubraum je nach Reduktionsgrad ein mittlerer Leistungsbedarf von 50 W bis 150 W für den Plasmakatalysator angekommen werden, was der Autoindustrie durchaus zumutbar erscheint.

Daher ist zweckmäßiger Weise vorgesehen, daß das Abgas durch einen Entladungsraum geleitet wird, wobei die Temperatur des Abgases bei seiner Einleitung nicht mehr als 500°C, vorzugsweise nicht mehr als 400°C, beträgt, daß in diesem Entladungsraum oder zumindest in einem Teil dieses Entladungsraumes nur an oder in unmittelbarer Nähe seiner Begrenzung Elektronen erzeugt werden, daß im größten Teil dieses Entladungsraumes nach Berücksichtigung der Raumladung eine Feldstärke zwischen 5 kV/cm und 20 kV/cm, vorzugsweise zwischen 10 kV/cm und 15 kV/cm, erzeugt wird und daß der Strom durch diesen Entladungsraum nach der Motorleistung, vorzugsweise nach Einspritzmenge und/oder Abgasrückführung, geregelt wird, wodurch sich ein mittlerer spezifischer Leistungsbedarf von 0,2 bis 2 Wh/m³, vorzugsweise von 0,5 bis 1 Wh/m³ ergibt.

Das Feld kann auch derart gesteuert werden, daß an den Begrenzungsflächen des Entladungsraumes hinreichend Elektronen gebildet und diese Elektronen im Entladungsraum beschleunigt werden. Es darf jedoch nicht zur Ausbildung von Funken kommen. Daher muß das Feld abgeschaltet werden, bevor die Elektronen die Gegenelektroden erreichen.

Dies wird vorzugsweise durch ein pulsierendes Gleichspannungsfeld im Entladungsraum erreicht. Gemäß einer vorzugsweisen Ausführungsweise ist vorgesehen, daß die mit dem Gleichspannungsfeld gleichsinnige hochfrequente Feldamplitude während eines Impulses weniger als eine Mikrosekunde, vorzugsweise weniger als eine halbe Mikrosekunde, aufrecht erhalten wird. Zweckmäßigerweise wird die mit dem Gleichspannungsfeld gleichsinnige hochfrequente Feldamplitude während eines Impulses mindestens 0,25 Mikrosekunden, vorzugsweise mindestens 0,5 Mikrosekunden, aufrecht gehalten. Dadurch wird erreicht, daß das pulsierende Gleichspannungsfeld neben einer entsprechenden Zuführung von Energie, die die Elektronen auf ihrer freien Weglänge zwischen zwei Stößen mit Gasmolekülen (die im Mittel etwa 10⁻⁵ cm beträgt) aufnehmen, drei weitere Randbedingungen erfüllt:
1. die Gleichspannungskomponente stellt sicher, daß nur Elektronen, nicht aber positive Gasionen entstehen bzw. in den Entladungsraum gezogen werden.
2. der Impulsanteil, der den Elektronen hauptsächlich ihre Energie zuführt, wird etwa gleich lang aufrecht erhalten wie ihre Lebensdauer bis zu einer Anlagerung an Moleküle beträgt, also etwa 3.10⁻⁷ bis 7.10⁻⁷ Sekunden;
3. bevor es durch die hohe Feldstärke zu einer Auslösung von Funken kommt, muß der Impulsanteil des Feldes ausgeschaltet oder umgepolt werden; die dazu zur Verfügung stehende Zeit entspricht höchstens der Laufzeit des Vorfunkens, der sich aus der Laufzeit der Elektronen zur Gegenelektrode und der Laufzeit der positiven Ionen (die sich an der Gegenelektrode bilden können) zurück zur Entladungselektrode zusammensetzt.

Die Erfindung betrifft auch eine Vorrichtung zur Durchführung des Verfahrens. Diese Vorrichtung ist im Kennzeichen des Anspruches 8 näher ausgeführt.

Vorzugsweise sollen die Elektroden in Feldrichtung gesehen weiter von einander entfernt sein als die Reichweite der freien Elektronen beträgt. Aus diesen Gründen soll auch darauf geachtet werden, daß die Entfernung von Entladungselektrode und Gegenelektrode deutlich größer ist, als die mittlere Reichweite (etwa 10 mm bis 20 mm unter Drift im erfindungsgemäß applizierten Feld) der Elektronen vor ihrer Anlagerung. Der Grund liegt in der großen Breite dieser Reichweitenverteilung, so daß eine hinreichende Absicherung sicher erst bei Abständen zu finden ist, die der doppelten mittleren Reichweite der Elektronen oder mehr entsprechen.

Das Entladungsfeld kann nicht nur durch Hochfrequenzpulse vergrößert werden. Es genügt auch, die Spitzen der Entladungselektroden etwa 0,2 mm bis 3 mm, vorzugsweise 0,5 mm bis 2 mm, lang auszuführen, um die Ausbildung hoher Feldstärken zu ermöglichen. Zur Verhinderung von Funkenentladungen aufgrund der hohen Feldstärke ist die Gegenelektrode, und vorzugsweise auch die Entladungselektrode, mit einer isolierenden, vorzugsweise keramischen, Schicht überzogen, deren Dicke 0,2 mm bis 2 mm, vorzugsweise 0,5 mm bis 1,5 mm, beträgt und deren effektiver Durchgangswiderstand bezogen auf 1 cm² Fläche bei Zimmertemperatur 10⁵ bis 10⁹ Ohm·cm², vorzugsweise 10⁶ bis 10⁸ Ohm·cm², beträgt.

Da es technisch derzeit nicht möglich ist, dickere keramische Beschichtungen so auf Metall aufzubringen, daß der ständige Temperaturwechsel im Abgas nicht zu Rissen und Absplitterungen der Keramik führt, wird vorgeschlagen, die erwähnte Beschichtung auf eine dickere Trägerkeramik mit ähnlichem Ausdehnungskoeffizienten aufzubringen, wobei zwischen beiden Keramiken eine metallische Kontaktierung aufgebracht ist, die dünn genug ist, sich der Ausdehnung der Keramik anzupassen.

Die tragende Keramik ist auch als ein die Entladung kontrollierender Widerstand verwendbar, wobei sich bei dieser Verwendung die metallische Beschichtung auf der von der Entladungselektrode abgewandten Seite befindet.

Bei hohen Temperaturen läßt sich die Entladung noch weiter dadurch stabilisieren, daß auch die Entladungselektrode selbst mit einer isolierenden, vorzugsweise keramischen, Schicht überzogen ist, wobei es für die Erfindung besonders bedeutsam ist, daß jede Elektrodenspitze einen eigenen, die jeweilige Spitze kontrollierenden Widerstand besitzt.

Dies ist erfindungsgemäß dadurch verwirklicht, daß die Elektrode ähnlich der Gegenelektrode mit einer Widerstandsschicht versehen ist und diese Schicht wiederum mit einer grobstrukturierten metallischen Beschichtung bedeckt ist, die nicht zusammenhängend ist, daher keine elektrische Oberflächenleitung aufweist und deren kristalline Metallblöcke als Spitzen fungieren.

Da die Reduktion der Stickoxide (das "Denoxing") sowohl bei relativ tiefen Temperaturen um 100°C, als auch bei Vollgas, was je nach Lage der Vorrichtung im Abgasstrang zu Abgas-Temperaturen zwischen 500°C und 600°C führt, zu erfolgen hat, ergibt sich das Problem starker temperaturabhängiger Widerstandsänderungen in Werkstoffen. Zwischen 100°C und 600°C vermag sich der spezifische Widerstand in Keramiken um bis zu 5 Größenordnungen zu ändern, sodaß eine auf 100°C ausgerichtete Einstellung zur Funkenunterdrückung bei 600°C nicht mehr wirksam wäre, eine auf 600°C ausgerichtete Einstellung zur Funkenunterdrückung wiederum ein Arbeiten der Entladungselektrode bei 100°C unmöglich macht, da dann der hohe Spannungsabfall an der Widerstandsbeschichtung eine Entladung ganz unterbinden würde.

Erfindungsgemäß wird diese Schwierigkeit dadurch behoben, daß die Anzahl der Entladungsspitzen der Entladungselektrode 33 ziemlich groß gewählt und damit der Strom durch jede einzelne Spitze deutlich gesenkt ist. Ein Entladungsstrom der gesamten Entladungselektrode von 20 mA und eine Abregelspannung von 20 kV für einen Funken aus einer Spitze führen bei verschiedenen Spitzenzahlen zu folgenden Abregelströmen in Abhängigkeit vom Widerstandsverhältnis R (T₁) /R (T₂) :

| Anzahl der Spitzen: | 200 | 2000 | 20.000 | 200.000 | |
|---|---|---|---|---|---|
| R(25°C)/R(600°C)=10⁵ | 400 | 40 | 4 | 0,4 | A/Spitze |
| R(25°C)/R(600°C)=10⁴ | 40 | 4 | 0,4 | 0,04 | A/Spitze |
| R(25°C)/R(600°C)=10³ | 4 | 0,4 | 0,04 | 0,004 | A/Spitze |

Somit ist erkennbar, daß bei einer durch die Temperaturänderung hervorgerufenen Widerstandsänderung von 10⁵ Ohm Funken mit Sicherheit erst bei 200.000 Spitzen, sehr wahrscheinlich aber schon bei 20.000 Spitzen verhindert werden können, während bei einer Widerstandsänderung von 10⁴ bereits bei 20.000 Spitzen mit Sicherheit, bei 2000 Spitzen sehr wahrscheinlich Funken verhindert werden.

Erfindungsgemäß ist auch eine Verringerung der temperaturabhängigen Widerstandsänderung dadurch vorgesehen, daß die Keramik durch eine Dotierung mit leicht ionenbildenden Substanzen, vorzugsweise Na oder K oder KNaO, einen flacheren temperaturabhängigen Widerstandsverlauf erhält. Eine weitere erfindungsgemäße Vorrichtung sieht die Verwendung einer Keramik mit positivem Temperaturkoeffizienten (PTK, auch Kaltleiter genannt) vor, die vorzugsweise kombiniert oder gemischt mit normaler Keramik einen Widerstandsverlauf von sehr geringer Temperaturabhängigkeit aufweist und so die Verwendung von Metallelektroden, die bis zu etwa 2000 Spitzen leicht herstellbar sind, sehr begünstigt.

Der Wirkungsgrad des Denoxing kann erfindungsgemäß dadurch weiter verbessert werden, daß nicht jedes NOx-Molekül von einem Elektron angestoßen wird, sondern ein Anregungszustand des im reichen Maße im Abgas vorhandenen Sauerstoffs O₂ ausgenützt wird, um die für die Dissoziation von NOx notwendige Energie zu übertragen. Durch Elektronen mit kinetischen Energien über 1 eV ("heiße" Elektronen) wird bei Stößen mit O₂-Molekülen ein angeregter Zustand des Sauerstoffs gebildet, der durch Weitergabe seiner Energie an das NOx in der Lage ist, NOx zu dissoziieren. Im Abgas sind viel mehr O₂-Moleküle als NOx-Moleküle vorhanden, weswegen auch mehr von ihnen von heißen Elektronen getroffen und zu sogenannten Singulett-Sauerstoff-Radikalen (SSR) angeregt werden. SSR mit zwei ungepaarten Elektronen in der äußersten Schale als Anregungszustand besitzen eine Anregungsenergie von etwa 1 eV. Diese Energie ist also klein genug, keine Dissoziation von Sauerstoff oder Stickstoff zu verursachen und groß genug, um einen guten Wirkungsgrad für die Dissoziation von NOx zu erzielen.

Die Zeit, in der SSR angeregt bleibt, liegt im Bereich von nur einigen Millisekunden, weswegen für einen schnellen und effizienten Kontakt zwischen SSR und NOx gesorgt werden muß. NOx wird in einem Zeolithen, das ist ein Molekularsieb mit vielen Öffnungen, deren Größe auf das zu absorbierende Molekül justiert ist, absorbiert, bis es von einem SSR getroffen wird. Als Variante wird ein spezieller Katalysator oder ein Molekularsieb verwendet, das SSR festhält, bis ein NOx zur Dissoziation angeregt wird.

Daher ist zur erfindungsgemäßen Verbesserung des Wirkungsgrades ein Katalysator oder ein Molekularsieb, vorzugsweise ein Zeolith, in Verwendung. Aufgrund der geringen mittleren Lebensdauer des Singulett-Sauerstoffs im Abgas von nur wenigen Millisekunden müssen der Ort des Katalysators und der Ort der Erzeugung des Singulett-Sauerstoffs, also die Hochfeld-Entladungselektrode, nahe beieinander liegen.

Erfindungsgemäß wird dies erreicht durch eine Anordnung, bei welcher sich Teile der Entladungselektrode mit Teilen des Katalysators abwechseln, wobei die Teile klein genug sind, so nahe beieinander zu liegen, daß möglichst viele angeregte Sauerstoffmoleküle zum Katalysator gelangen.

Die Erfindung wird nun an Hand der Zeichnungen näher beschrieben.
- Die Fig. 1 und 2: zeigen zwei Ausführungsformen einer Vorrichtung zur Durchführung des erfindungsgemäßen Verfahrens,
- Fig. 3: zeigt eine schematische Darstellung der physikalischen Vorgänge bei einer erfindungsgemäßen Vorrichtung und
- Fig. 4 - 7: zeigen weitere Ausführungsformen der erfindungsgemäßen Vorrichtung.

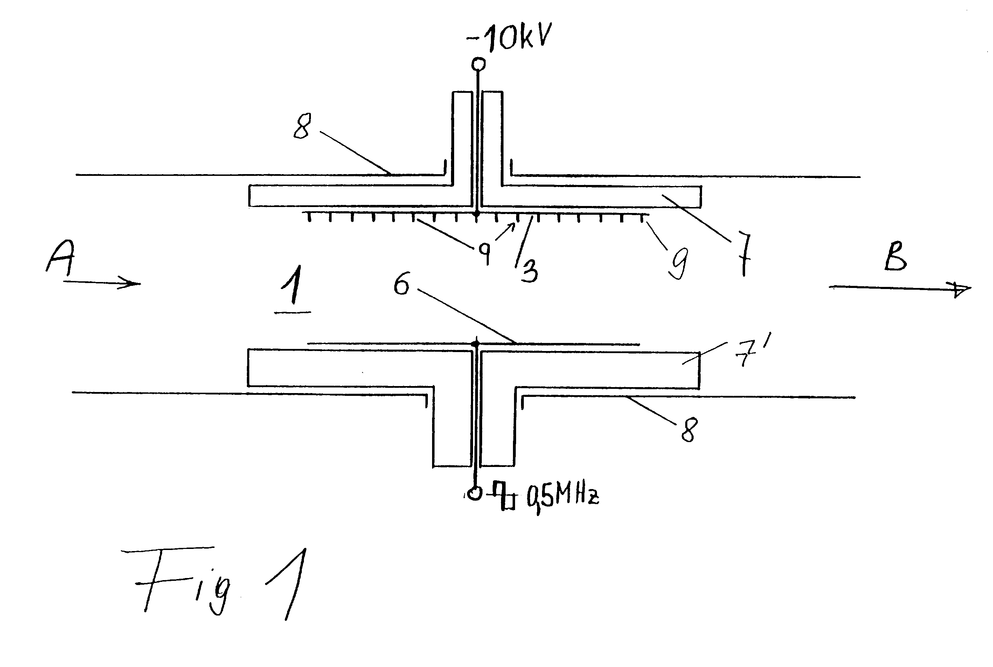

Bei der Ausführung nach Fig. 1 strömt das Abgas bei A mit einer Temperatur von unter 400°C, vorzugsweise unter 300°C, in den durch zwei Elektroden 3, 6 begrenzten in einem Gehäuse 8 angeordneten Entladungsraum 1 und verläßt diesen bei B. Die Elektrode 3 ist als Entladungselektrode ausgebildet und besitzt etwa 0,2 mm bis 3 mm lange, vorzugsweise 0,5 mm bis 2 mm lange, Spitzen 9. An der Entladungselektrode 3 liegt eine negative Gleichspannung von -10 kV. Die Gegenelektrode 6 ist als Hochfrequenzelektrode ausgebildet und ist im Abstand von etwa 30 mm von der Entladungselektrode 3 angeordnet. An die Gegenelektrode 6 wird ein bipolarer Rechteckimpuls mit einer maximalen Spannungsamplitude von 30 kV angelegt, dessen positiver Impulsteil eine Dauer von 0,4 Mikrosekunden mit einer Wiederholungsfrequenz von 500 kHz aufweist. Entsprechend temperaturresistente Isolatoren 7, 7' schirmen die Elektroden 3, 6 gegen das Gehäuse 8 der Vorrichtung ab.

Nimmt man einen Spannungsabfall von 4 kV des stationären Feldes unmittelbar um die Entladungselektroden an, so addieren sich der verbleibende Teil des stationären Feldes von etwa -2kV/cm und der positive Impulsanteil des Hochfrequenzfeldes von -10 kV/cm (gegenüberliegende Elektrode, daher vorzeichenwechsel!) zu einer 0,4 µs dauernden Feldstärke von 12 kV/cm, die aus der Entladungselektrode 3 Elektronen zieht und in Richtung Gegenelektrode 6 beschleunigt.

Die sich um die Entladungselektrode 3 aufbauende Raumladung verringert das Feld an der Entladungselektrode 3 und die Elektronenemission geht zurück. Bevor die Elektronen in etwa 0,5 µs die Gegenelektrode 6 erreichen, stellt der negative Teil des bipolaren Impulses die gesamte Feldstärke mit dem oben angenommenen Tastverhältnis von 1:4 auf etwa + 0,5 kV/cm.

In der Phase der hohen Feldstärke treten Elektronen aus der Entladungselektrode aus und werden zwischen ihren Stößen mit Molekülen der Abgase vom Feld beschleunigt, wobei ihre Energieaufnahme von ihrer freien Weglänge und der Orientierung der Bewegungsrichtung zum Feld abhängt. Nach etwa 200.000 Stößen (Mittelwert) lagern sich die Elektronen an elektronegative Moleküle (hauptsächlich Sauerstoff, Wasserdampf, aber auch Kohlenwasserstoffe) im Abgas an und können dann entsprechend der großen Ionenmasse sehr viel weniger Energie aus dem Feld aufnehmen.

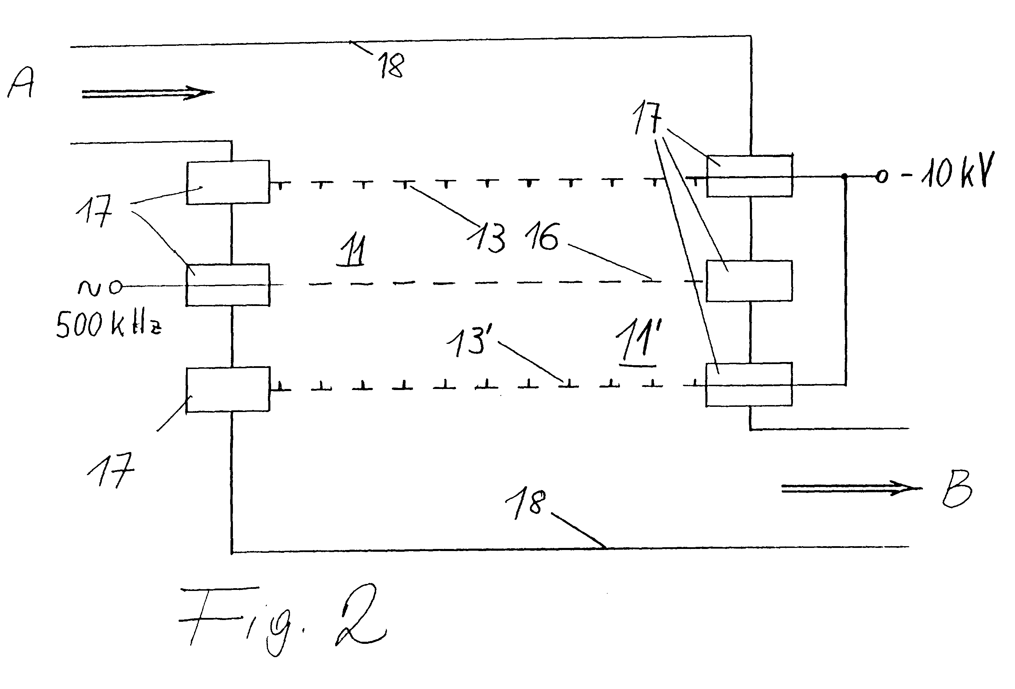

Bei der Ausführungsform der Vorrichtung nach Fig. 2 befindet sich ein zweiteiliger Entladeraum 11, 11' in einem Gehäuse 18. Das Abgas tritt bei A in das Gehäuse 18 ein, durchströmt den Entladeraum 11, 11' und verläßt das Gehäuse bei B. Der Entladeraum ist durch zwei Entladungselektroden 13, 13' begrenzt und durch eine Gegenelektrode 16 in zwei Teile 11, 11' unterteilt. Die Elektroden 13, 13' und 16 sind gitterförmig ausgebildet und zwischen temperaturresistenten Isolatoren 17 eingespannt. Die Entladungselektroden 13, 13' sind im Abstand von etwa 25 mm von der Gegenelektrode 16 angeordnet. An den beiden Entladungselektroden 13, 13' liegt eine -10 kV Gleichspannung und an der Gegenelektrode 16 eine sinusförmige Wechselspannung mit 500 kHz und 30 kV Amplitudenspitze. Das Abgas strömt durch die gitterförmigen Elektroden 13, 13', 16, wobei sich im ersten Entladungsraum 11 die Elektronen mit dem Abgas, im zweiten Entladungsraum 11' die Elektronen gegen das Abgas bewegen.

Da nun die Entladungselektronen 13, 13' von der Gegenelektrode 16 nur 25 mm voneinander entfernt sind, ergibt sich zwar eine höhere negative Feldspitze von mehr als -14 kV/cm, aber ein Mittelwert über die negative Amplitude von weniger als -10 kV/cm. Für die positive Amplitude ergeben sich entsprechende Werte von weniger als +10 kV/cm bzw. weniger als +7 kV/cm.

Die Funktionsweise der Einrichtung nach Figur 2 ist ähnlich jener nach Figur 1. Die aus den Entladungselektroden 13, 13' austretenden Elektronen werden in Richtung der Gegenelektrode beschleunigt und brechen die im Abgas vorhandenen NOx-Moleküle auf.

Figur 3 zeigt die physikalischen Vorgänge in einer erfindungsgemäßen Vorrichtung in schematischer Form. Das Abgas durchströmt den Entladungsraum 21 in Richtung des Pfeiles A. Im Entladungsraum 21 zwischen der Entladungselektrode 23 und der Gegenelektrode 26 sind neben den Abgasen Stickstoffmoleküle N₂, Sauerstoffmoleküle O₂ und NO-Moleküle vorhanden. An der Entladungselektrode 23 liegt eine Gleichspannung von -10 kV und an der Gegenelektrode eine pulsierende Hochspannung in der Form von bipolaren Rechteckimpulsen, mit einer Amplitude von 30 kV.

Aus der Entladungselektrode 23 wird durch die kurzzeitig auftretende hohe Spannung von insgesamt 40 kV, die während des zur Gleichspannung gleichsinnigen Rechteckimpulses zwischen den Elektroden herrscht, ein Elektron gezogen und in Richtung der Gegenelektrode (Hochfrequenzelektrode) 26 beschleunigt. Dabei erreicht das Elektron zwischen zwei Stößen eine zur thermischen Energie zusätzliche kinetische Energie in eV, die der durchlaufenen Potentialdifferenz entspricht. Diese ergibt sich durch das Produkt seiner jeweiligen Wegkomponente in Feldrichtung zwischen zwei Stößen (Beschleunigungsstrecke) und der Feldstärke.

Bei einer angenommenen Feldstärke von 10 kV/cm und einer mittleren freien Weglänge von 2.10⁻⁵ cm bei 330°C ergibt sich eine maximale Energieaufnahme von 0,2 eV, wenn das Elektron sich in Richtung Gegenelektrode 26 bewegt.

In der Darstellung stößt das Elektron e⁻ zuerst mit einem Stickstoffmolekül N2 und anschließend mit einem Sauerstoffmolekül O2 zusammen. Andere Komponenten des Abgases, wie etwa Wasser oder Kohlenwasserstoffe verhalten sich ebenso, wurden aber der einfacheren Darstellung wegen weggelassen. Da die Energie des Elektrons e⁻ während dieser Stoßvorgänge erfindungsgemäß unter 5,1 eV bleibt, kann es diese Gase nicht dissoziieren, trägt also nicht zur Ozon- oder NOx-Bildung bei. Bei seinem Zusammenstoß mit einem NO-Molekül aber reicht seine Energie zur Dissoziation des NO-Moleküls aus. Das hier dargestellte NO macht den überwiegenden Anteil aller Stickstoffoxide aus. Die Verbindung wird aufgelöst, wobei das Elektron e⁻ vorzugsweise am elektronegativen Sauerstoff haften bleibt.

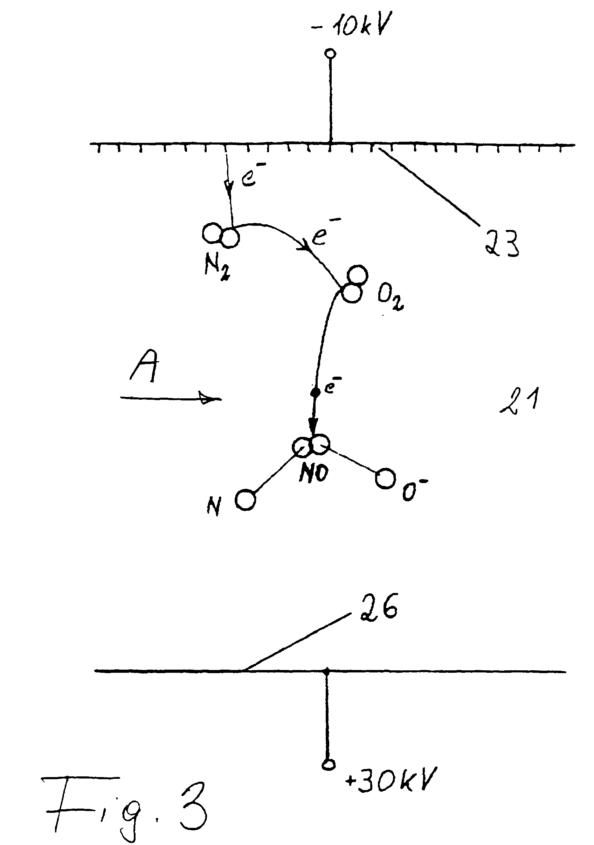

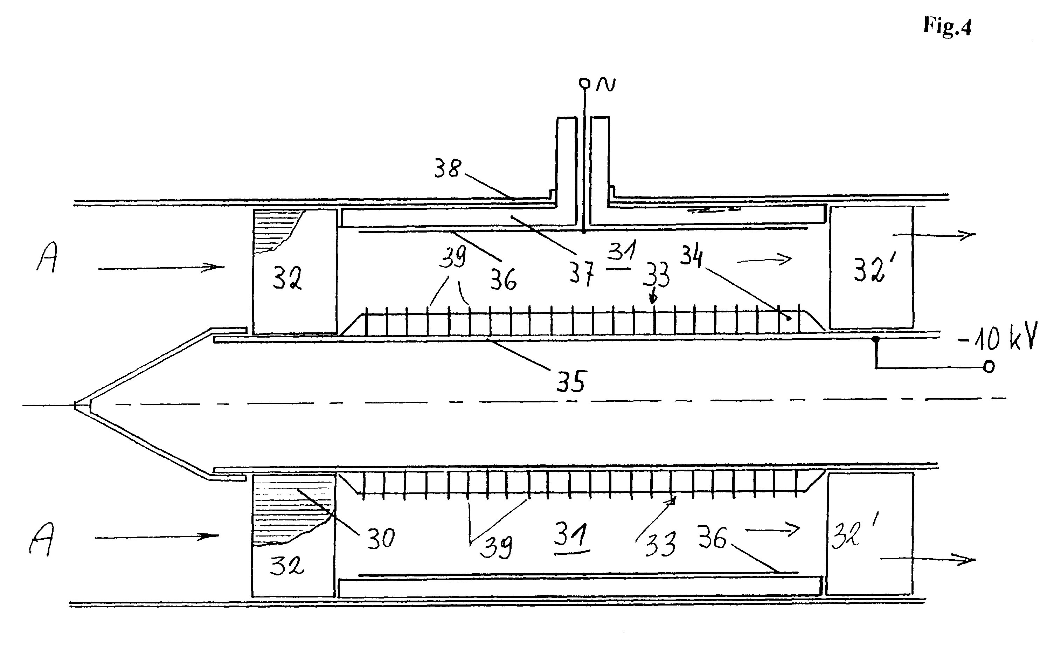

Fig. 4 zeigt einen Längsschnitt durch eine erfindungsgemäße Vorrichtung des NOx-Konverters mit zylinderförmigem Aufbau. In einem zylinderförmigen Topf 38 ist auf einem Stahlrohr 35 eine Entladungselektrode 33 in Form von zahnförmigen Elektrodenscheiben 39, deren Zähne zwischen 0,2 mm und 3 mm, vorzugsweise zwischen 0,5 mm und 2 mm, lang sind und die durch Distanzringe 34 auf Abstand gehalten werden, angeordnet. Das Stahlrohr 35 ist durch zwei Isolatoren in Form von kreisringförmigen Scheiben 32, 32' eines keramischen Wabenkörpes gehalten, der feine Kanäle 30 für das Durchströmen des Abgases aufweist. Gegenüber der Entladungselektrode 33 ist an der Innenseite des Topfes 38 eine Gegenelektrode 36 angeordnet, die durch einen kreisringförmigen Isolator 37 aus keramischem Material isoliert ist. An der Entladungselektrode 33 wird eine negative Hochspannung von 10 kV und an der Gegenelektrode 36 eine Hochfrequenzspannung angelegt. Zwischen der Entladeelektrode 33 und der Gegenelektrode bildet sich ein kreisringförmiger Entladungsraum 31.

Das Abgas durchströmt von links nach rechts in Richtung der Pfeile A den Wabenkörper 32, dann den kreisringförmigen Entladungsraum 31 und verläßt den NOx Konverter durch den Wabenkörper 32', wobei im Entladungsraum 31 die Nox-Bestandteile des Abgases erfindungsgemäß dissoziert werden.

Die Verwendung eines Wabenkörpers 32, 32' als Träger der Entladungselektrode 33 hat große Vorteile, da alle anderen Isolatoren sich in kurzer Zeit so dick mit Ruß belegen, daß dieser leitend wird und die Elektrode kurzschließt. Die Öffnungen des Wabenkörpers durchbrechen die Oberfläche und verhindern so die Ausbildung einer dicken, gleichmäßigen Rußoberfläche. Der Ruß, der sich auf den dünnen Stegen zwischen den Eintrittsöffnungen ablagert, bricht von Zeit zu Zeit ab und verhindert so die Ausbildung eines Kurzschlusses. Ein Verstopfen der Wabenkanäle findet nicht statt, da diese durch das hindurchströmende Abgas laufend gereinigt werden.

Die Zähne der Entladungselektroden 39 sind wesentlich kürzer, als es einer normalen Entladungselektrode entsprechen würde, da die Gasentladung an den Zähnen 39 nur dann stattfindet, wenn durch die Hochfrequenzelektrode 36 zusäzlich ein positiver Hochspannungsimpuls von etwa 0,5 Mikrosekunden Dauer und etwa 20 kV bis 30 kV Amplitude angelegt wird. Innerhalb dieser 0,5 Mikrosekunden erreichen die Elektronen die gegenüberliegende Hochfrequenzelektrode, wobei jedes Elektron unter dem hohen Feld etwa 2.10⁵ Stöße mit Gasmolekülen erleidet, an die es im Mittel jeweils die zwischen zwei Stößen aus dem Hochspannungsfeld aufgenommene Energie von etwa 0,2 eV bis 0,5 eV abgibt. Diese Energie reicht zum Zerfall der unter 300°C bis 400°C instabilen Stickstoffoxidverbindungen aus. Der NOx-Konverter wird zweckmäßigerweise am Ende des Abgasstranges anstelle des zweiten Schalldämpfers installiert.

Spätestens dann, wenn die Elektronen die Hochfrequenzelektrode 36 erreichen, wird die Hochspannung in erfindungsgemäßer Weise abgeschaltet, um die Ausbildung von Funkenüberschlägen zu verhindern. Der Isolator 37 muß wegen der hochfrequenten Spannung ein Material mit kleiner Dielektrizitätskonstante und kleiner Permeabilität sein, vorzugsweise ein Wabenkörper aus dichtgebrannter Keramik, dessen Kanäle auf einer oder beiden Seiten verschlossen sind.

Vorzugsweise können die Wabenkörper 32, 32' als elektrostatische Rußfilter gemäß der EP-A 0332689 ausgebildet werden. Dabei ist es zweckmäßig, wenn vor dem ersten Wabenkörper 32 eine Ionisationsstrecke, welche mit der Elektrodenanordnung 33, 36 ident sein kann, angeordnet ist.

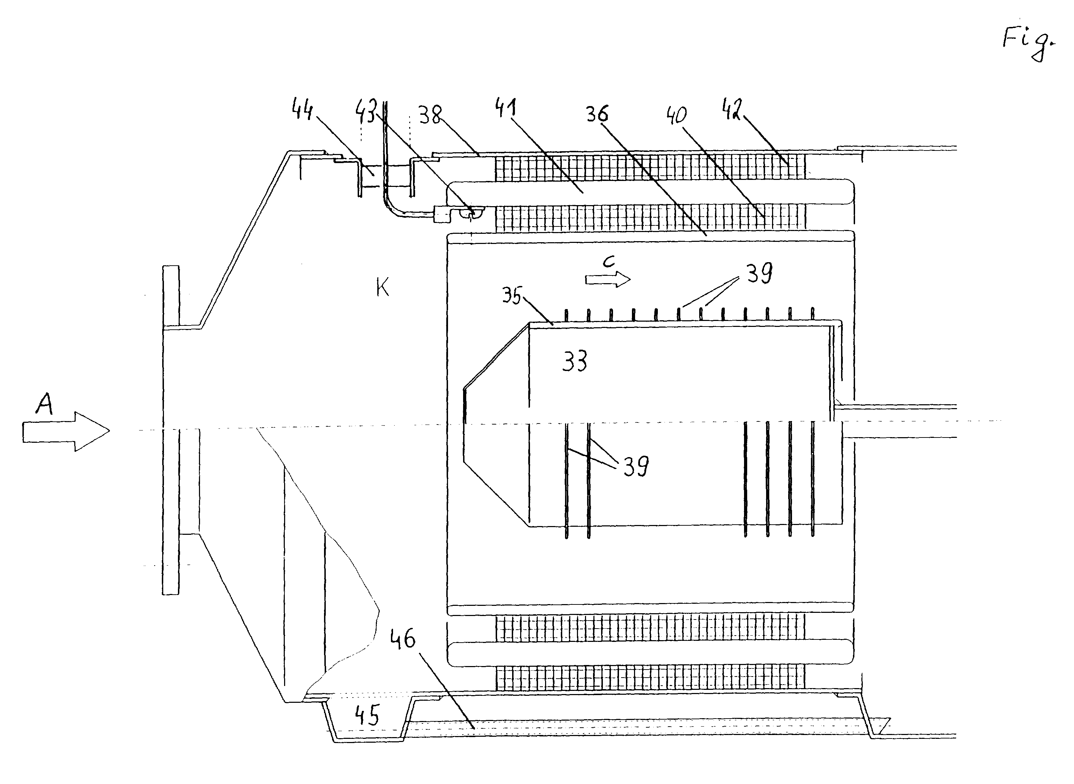

Fig. 5 zeigt eine Ausführungsform der Erfindung in zylinderförmiger Geometrie mit einem Topf 38, in dessen Mitte sich eine Entladungselektrode 33 befindet. Die Entladungselektrode 33 besteht aus zahnförmigen Elektrodenscheiben 39, die auf ein Stahlrohr 35 mittels Laser so aufgeschweißt sind, daß sich etwa 1 bis 10 Spitzen 39 mit ca. 1,5 mm Länge auf einem Quadratzentimeter Elektrodenfläche befinden.

Gegenüber der Entladungselektrode 33 und konzentrisch dazu befindet sich an der Innenseite des Topfes 38 eine zylinderförmige Gegenelektrode 36 aus Keramik, die über eine elektrisch leitende Matte 40 durch einen zylindrischen Metallzylinder 41 kontaktiert ist. Dieser Metallzylinder 41 ist durch eine weitere isolierende Matte 42 im Topf 38 fixiert. Dies hat den Vorteil, daß der Entladungsstrom über eine Schraube 43 und eine elektrische Durchführung 44 ohne Erdkontakt einer elektronischen Regelung der Entladung zuführbar ist. Eventuell im Winterbetrieb auftretendes Kondenswasser wird in Wassertaschen 45 gesammelt und über Drainagerohre 46 abgeleitet.

Das Funktionsprinzip ist wie folgt: Die Abgase strömen entlang der mit A bezeichneten Richtung in die Vorrichtung ein und gelangen in die Entladungsstrecke zwischen Entladungselektrode 33 und Gegenelektrode 36. Während die Abgase entlang der mit C bezeichneten Richtung die Entladungsstrecke passieren, wird NOx durch beschleunigte Elektronen dissoziiert.

Das Material der keramischen Gegenelektrode 36 weist bei Zimmertemperatur einen spezifischen Widerstand von 5·10⁷ Ohm·cm und eine Wandstärke von 6 mm auf, sodaß sich ein Durchgangswiderstand der keramischen Gegenelektrode 36 von 3·10⁷ Ohm·cm² ergibt. Durch eine entsprechende Dotierung mit NaKO ergibt sich ein sehr flacher Verlauf des Durchgangswiderstands, der bei 600°C 3·10⁴ Ohm·cm² beträgt.

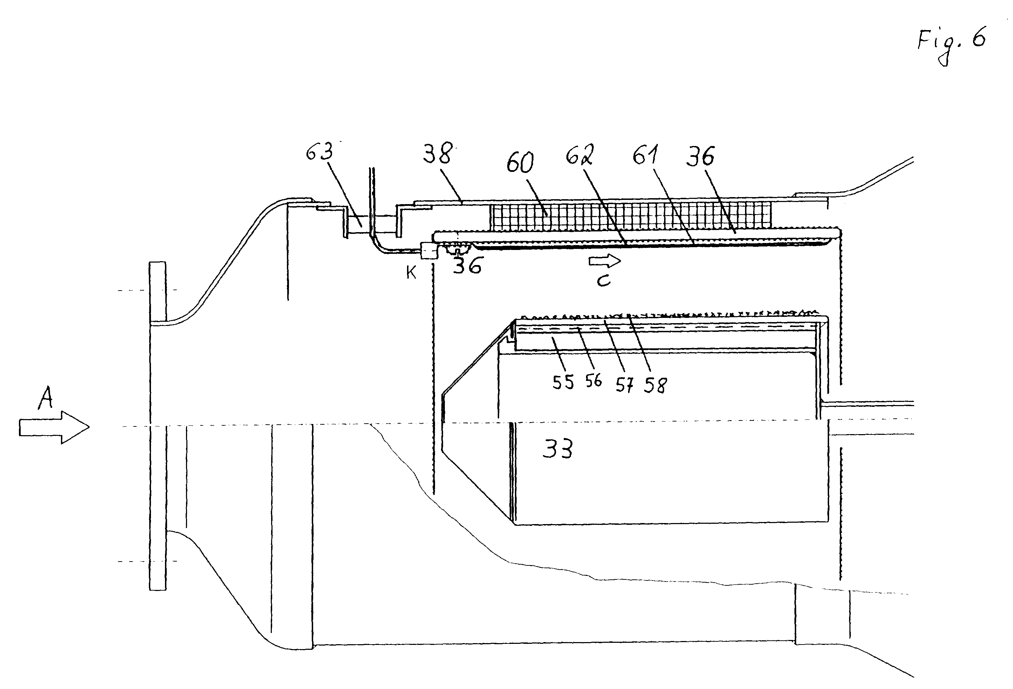

Fig. 6 zeigt eine weitere erfindungsgemäße Ausführungsform, bei der eine zylinderförmige Entladungselektrode 33 auf einem tragenden keramischen Rohrteil 55 aufgebaut ist. Dieser ist mit einer dünnen, elektrisch leitenden Metallbeschichtung versehen, die vorzugsweise mit einem Plasmaverfahren aufgebracht wird. Darüber befindet sich eine 1 mm dicke keramische Schicht 57, die bei Zimmertemperatur einen Durchgangswiderstand von 2·10⁶ Ohm·cm² und den gleichen Ausdehnungskoeffizienten wie der tragende Rohrteil hat. Auf diese isolierende Schicht 57 wird, vorzugsweise mit einem Plasmaverfahren, ein Metallüberzug 58, vorzugsweise Titan, Wolfram oder Molybdän, aufgebracht, der in sehr grober Körnung bei möglichst niedriger Temperatur aufgesprüht wird, sodaß sich keine metallisch leitende Schicht bildet, sondern eine sehr rauhe Oberfläche, auf der jedes grobe Metallaggregat eine eigene Entladungselektrode darstellt, wobei je nach Feldstärke etwa 100 bis 200 Spitzen pro cm² Strom abgeben. Bei einem elektrischen Feld von 20 kV/cm sprühen etwa 100 Spitzen/cm² einen Sprühstrom von durchschnittlich 1 µA/Spitze in Richtung Gegenelektrode 36.

Das Funktionsprinzip ist wie folgt: Die Abgase strömen entlang der mit A bezeichneten Richtung in die Vorrichtung ein und gelangen in die Entladungsstrecke zwischen Entladungselektrode 33 und Gegenelektrode 36. Während die Abgase entlang der mit C bezeichneten Richtung die Entladungsstrecke passieren, wird NOx durch beschleunigte Elektronen dissoziiert.

Um die Entladungselektrode 33 herum ist koaxial und mit einem Wandabstand von 20 mm als Gegenelektrode 36 ein keramischer Zylinder von einer isolierenden Matte 60 im Topf 38 gehalten, dessen Innenfläche 61 ebenso metallisch kontaktiert ist. Darüber ist eine 1 mm dicke keramische Schicht 62 mit einem ähnlichen Durchgangswiderstand von etwa 2·10⁶ Ohm·cm² und dem gleichen Ausdehnungskoeffizient wie der tragende Rohrteil 60 aufgebracht. Während die Kontaktierung des äußeren Rohrteils erdungsfrei über eine elektrische Durchführung 63 zum Regelteil der Entladungsspannung geleitet ist, dessen Verstärkereingang sich ungefähr auf Erdpotential befindet, liegen an der metallischen Kontaktierung der Entladungselektrode 33 etwa 40 kV negative Spannung, wodurch sich eine mittlere äußere Feldstärke von etwas weniger als 20 kV/cm ergibt. Durch den Strom von 100 µA/cm² ergibt sich durch die Raumladung der Elektronen und die sich bildenden negativen Gasionen und den Spannungsabfall in den Widerstandsschichten eine mittlere innere Feldstärke von etwa 15 kV/cm bis 17 kV/cm.

Ist je mm² zumindest ein Metallaggregat vorhanden, das zum Sprühen spitz genug ist, und liefert jedes dieser Aggregate einen Sprühstrom von etwa 1 µA, so beschickt jede dieser Spitzen über die isolierende Schicht von 1 mm² Fläche auch eine Fläche der Gegenelektrode von etwa 1 mm². Es ergibt sich daher bei einem Durchgangswiderstand von 2·10⁶ Ohm·cm² ein effektiver Arbeitswiderstand von etwa 2·10⁸ Ohm, was eben dem Durchgangswiderstand 2·10⁸ Ohm·mm² entspricht. Dieser Sprühstrom von 1 µA erzeugt in der keramischen Beschichtung der Entladungselektrode einen Spannungsabfall von etwa 200 V und in der gleichen keramischen Beschichtung der Gegenelektrode ebenfalls einen Spannungsabfall dieser Größe, sodaß die Entladungsspannung von 40 kV um etwa 400 V reduziert wird.

Bei diesem Betrieb wirken sich die beiden Serienwiderstände stabilisierend aus. Ist eine Spitze besonders hoch und neigt daher dazu, einen deutlich größeren Strom zu ziehen, z.B. 5 µA, so fallen bereits 2 kV ab, und die Entladung wird dadurch und durch die verursachte höhere Raumladung gemindert. Bildete sich nun ein Vorfunken (ein sogenannter "streamer") von etwa 100 µA, so ergäbe sich näherungsweise ein Spannungsabfall von 20 kV an der Elektrode und ebensoviel an der Gegenelektrode, sodaß bereits die gesamte Entladungsspannung abgebaut ist. Dies ist auch der Grund für die Bemessung der Dicke der keramischen Beschichtung, die eine Durchschlagsfestigkeit von 20 kV/mm haben muß, wie sie etwa für dichten Kordierit angegeben wird. In der Realität kommt es erst gar nicht zu einer Ausbildung der erwähnten 100 µA, da der Vorfunken noch keinen Kurzschluß hergestellt hat und noch eine erhebliche Antriebsspannung braucht, die ihm durch den spontanen und inhärenten Spannungsabfall entzogen wird. Da durch die Serienschaltung beider Widerstände auch keine Kapazität vorhanden ist, kann der Vorfunken auch auf keiner kapazitiven Ladung beruhen und bricht daher ab.

Die Vorrichtung ist auch für den Betrieb bei Temperaturen von 400°C und mehr gedacht, bei denen der Widerstand bereits wesentlich abgenommen hat. Je nach Abnahme des Widerstands erfolgt nun die Unterbrechung des Funkens bei einem höheren Stromwert. Hat der Widerstand beispielsweise um vier Größenordnungen, also auf 2·10² Ohm·cm² resp. 2·10⁴ Ohm·mm² abgenommen, so erfolgt eine vollständige Abregelung der Spannung erst bei einem Entladungsstrom von 1 A. Die bei Funkenentladungen auftretenden Zündströme liegen noch um vieles höher.

Es ist noch vorteilhafter, wenn die keramische Widerstandsschicht erfindungsgemäß als PTK-Widerstand ausgebildet ist oder zumindest durch eine hohe, bei tiefen Temperaturen bereits voll im Leitungsband befindliche Fremdleitung einen mit höheren Temperaturen nur schwach fallenden Widerstand aufweist. Eine derartige Fremdleitung wird in der Keramik vorzugsweise durch Dotierung mit Na, K oder beiden, z.B. in Form von KNaO, erzielt.

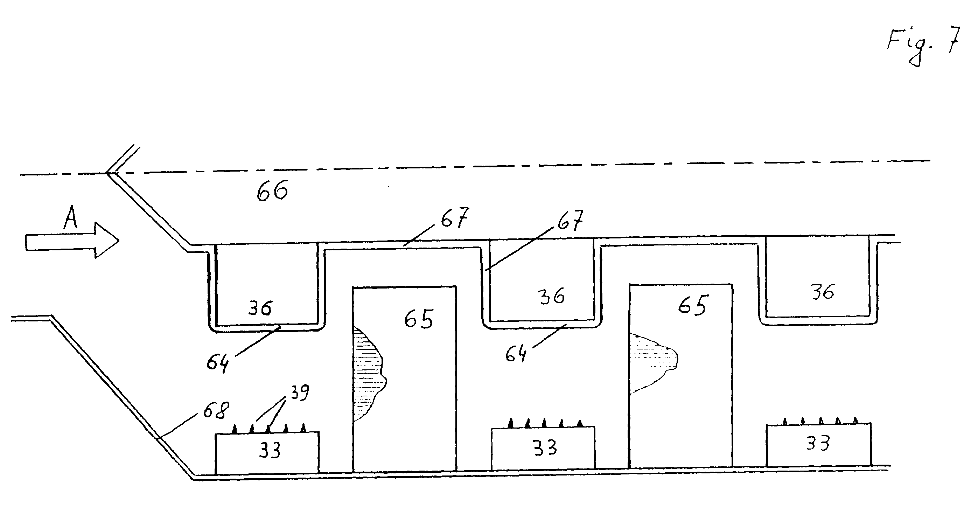

Fig. 7 zeigt eine erfindungsgemäße Vorrichtung für das Denoxing von Abgasen, die aus Diesel- oder Ottomotoren, insbesondere Magermotoren, stammen, unter Verwendung eines Katalysators und oder Zeolithen. Bei dieser Anordnung sind abwechselnd Hochfeld-Entladungsstrecken, die aus einer Entladungselektrode 33 und einer in vorzugsweise 20 mm Abstand angeordneten Gegenelektrode 36 bestehen, und katalytisch beschichtete Wabenkörpern 65 im Gasstrom so hintereinander angeordnet, daß ein Abstand von vorzugsweise weniger als 1 cm zwischen Ende der Entladungsstrecke und Anfang des Katalysators besteht.

Das Funktionsprinzip ist wie folgt: Die Abgase strömen entlang der mit A bezeichneten Richtung in die Vorrichtung ein und gelangen in die erste Entladungsstrecke zwischen Entladungselektrode 33 und Gegenelektrode 36. In dieser Entladungsstrecke wird NOx durch beschleunigte Elektronen dissoziiert. Gleichzeitig mit den beschleunigten Elektronen entstehen auch Singulett-Sauerstoff-Radikale mit einer durchschnittlichen Lebensdauer von wenigen Millisekunden. Je nach Ausführungsform werden entweder NOx oder Singulett-Sauerstoff-Radikale im Katalysator/Zeolithen 65 aufgehalten, sodaß sich eine deutlich erhöhte Wahrscheinlichkeit des Zusammentreffens von Singulett-Sauerstoff-Radikalen (SSR) und NOx ergibt. Durch das Zusammentreffen von SSR und NOx wird zusätzlich NOx dissoziiert. Das Abgas durchläuft mehrere hintereinander angeordnete gleich aufgebaute Kombinationen aus Entladungsstrecke und Katalysator.

In der gegenständlichen Ausführungsform liegen die Entladungselektroden 33 auf Erdpotential und besitzen 2 mm lange Spitzen 39. Ihnen gegenüber befinden sich die Gegenelektroden 36, die von einem koaxial angeordneten, zylindrischen Körper 66 getragen sind, der ihnen auch die Hochspannung zuführt. Diese Gegenelektroden 36 besitzen auf der den Elektrodenspitzen 39 zugewandten Seite eine 2 mm dicke keramische Beschichtung 64 mit einem spezifischen Widerstand von 10⁷ Ohm·cm, während die übrigen Seiten und auch der zylindrische Körper 66 eine keramische Beschichtung 67 mit einem spezifischen Widerstand von mehr als 10¹¹ Ohm·cm aufweisen. Die keramischen Wabenkörper 65 berühren den unter Hochspannung stehenden zylindrischen Körper 66 nicht, um keine Isolationsströme zu verursachen.

Aufgrund der gewählten Abmessungen, d.h. des zwischen Entladungselektrode 33 und Gegenelektrode 36 befindlichen Volumens, liegt die Strömungsgeschwindigkeit des Abgases zwischen Entladungsstrecke und Katalysator 65 je nach Fahrtzustand zwischen 10 m/s und 20 m/s, sodaß der Gasstrom den Abstand zwischen Entladungsstrecke und Katalysator 65 in weniger als einer Millisekunde bewältigt. Dadurch gelangt der größte Teil der in der Entladungsstrecke gebildeten Singulett-Sauerstoff-Radikale in den Katalysator, wo der Übertrag ihrer Anregungsenergie von etwa 1 eV bevorzugt zur Dissoziation von NOx verwendet wird. Der Katalysator 65 ist als Zeolith, d.h. als Molekularsieb mit vielen Öffnungen, deren Größe auf das zu absorbierende Molekül eingestellt ist, ausgeführt, um NOx zu binden. Als Ausführungsvariante ist auch ein spezieller Katalysator oder ein Molekularsieb denkbar, um SSR festzuhalten, bis NOx zur Dissoziation angeregt werden kann.

## Patentansprüche

1. Verfahren zur Zerlegung von stickstoffoxiden in Abgasen von Verbrennungsmotoren, insbesondere Dieselmotoren, wobei das Abgas durch einen Entladungsraum geleitet wird und in diesem Entladungsraum Elektronen erzeugt werden, **dadurch gekennzeichnet**, daß Elektronen nur an einem Teil der Begrenzungen des Entladungsraumes erzeugt werden, wobei im größten Teil dieses Entladungsraumes nach Berücksichtigung der Raumladung eine Feldstärke zwischen 5 kV/cm und 20 kV/cm, vorzugsweise zwischen 10 kV/cm und 15 kV/cm, erzeugt wird und daß durch Einstellung der Feldstärke im Entladungsraum die Elektronen eine Energie erhalten, die hinreichend ist, um eine Dissoziation der Stickstoffoxide durchzuführen ohne jedoch dabei den im Abgas enthaltenen Molekularen Sauerstoff zu dissozieren.

2. Verfahren zur Zerlegung von Stickstoffoxiden in Abgasen von Verbrennungsmotoren, insbesondere Dieselmotoren, nach Anspruch 1, **dadurch gekennzeichnet,** daß die Temperatur des Abgases bei seiner Einleitung in den Entladungsraum nicht mehr als 500°C, vorzugsweise nicht mehr als 400°C beträgt und daß der Strom durch den Entladungsraum nach der Motorleistung, vorzugsweise nach Einspritzmenge und/oder Abgasrückführung geregelt wird, wodurch sich ein mittlerer spezifischer Leistungsbedarf von 0,2 bis 2 Wh/m³, vorzugsweise von 0,5 bis 1 Wh/m³ ergibt.

3. Verfahren nach den Ansprüchen 1 bis 2, **dadurch gekennzeichnet**, daß ein hochfrequent pulsierendes Gleichspannungsfeld im Entladungsraum erzeugt wird und die mit dem Gleichspannungsfeld gleichsinnige hochfrequente Feldamplitude während. eines Impulses mindestens 0,25 Mikrosekunden, vorzugsweise mindestens 0,5 Mikrosekunden, aufrecht gehalten wird.

4. Vorrichtung zur Durchführung des Verfahrens nach einem der Ansprüche 1 bis 3, mit mindestens zwei einander gegenüberliegenden Elektroden (33, 16), die in einem an beiden Stirnseiten offenen , von Seitenwänden begrenzten Entladungsraum angeordnet sind, wobei mindestens eine Elektrode mit einer Hochgleichspannungsquelle und mindestens eine Elektrode mit Masse verbunden ist, **dadurch gekennzeichnet**, daß die Spannung der Hochgleichspannungsquelle für eine Feldstärke zwischen 5kV/cm und 20kV/cm ausreichend gewählt ist.

5. Vorrichtung nach Anspruch 4, **dadurch gekennzeichnet**, daß die als Entladungselektrode (33) fungierende Elektrode zylinderförmig ist, daß um sie herum ein zylinderkreisförmiger Entladungsraum (31) angeordnet ist, der vorzugsweise durch eine zylinderförmige Hochspannungselektrode (36) begrenzt ist (Fig. 4).

6. Vorrichtung nach Anspruch 5, **dadurch gekennzeichnet,** daß die zylinderförmige Entladungselektrode (33) von zwei kreisringförmigen, vom Abgas durchströmten Wabenkörpern (32; 32') aus dichtgebrannter Keramik gehalten ist.

7. Vorrichtung nach einem der vorhergehenden Ansprüche, **dadurch gekennzeichnet**, daß die Entladungselektrode (33) eine keramische Beschichtung mit sehr grober oberflächenstruktur aufweist, deren Durchgangswiderstand zwischen 10⁵ und 10⁹ Ohm.cm², vorzugsweise zwischen 10⁶ und 10⁸ Ohm.cm², liegt.

8. Vorrichtung nach einem der vorhergehenden Ansprüche, **dadurch gekennzeichnet,** daß auf der isolierenden Beschichtung der Entladungselektrode (33) eine sehr grobe, nicht zusammenhängende, nicht leitende Beschichtung (58) aus einem Metall, vorzugsweise Titan, Wolfram, Vanadium, Molybdän oder Legierungen aus ebengenannten, in Form grobkörniger spitzer oder kristalliner Strukturen aufgebracht ist (Fig. 6).

9. Vorrichtung nach einem der vorhergehenden Ansprüche, **dadurch gekennzeichnet**, daß die Gegenelektrode (36) und/oder die Entladungselektrode (33) als keramisches Rohr ausgebildet ist, dessen spezifischer Widerstand zwischen 10⁵ und 10⁹ Ohm.cm, vorzugsweise zwischen 10⁶ und 10⁸ Ohm.cm, liegt.

10. Vorrichtung nach einem der vorhergehenden Ansprüche, **dadurch gekennzeichnet**, daß das keramische Material der Gegenelektrode (36) und/oder der Entladungselektrode (33) mit einer ionenbildenden Substanz, vorzugsweise Na, K oder NaKO, dotiert ist.

## Claims

1. A method for the decomposition of nitrogen oxides in exhaust gases of internal combustion engines, and of diesel engines in particular, with the exhaust gas being conducted through a discharge chamber and electrons being produced in said discharge chamber, characterized in that electrons are produced in only a part of the delimitations of the discharge chamber, with a field strength of between 5 kV/cm and 20 kV/cm, preferably between 10 kV/cm and 15 kV/cm, being produced in the major part of said discharge chamber after considering the space charge and that by setting the field strength in the discharge chamber the electrons are provided with an energy which is adequate to perform a dissociation of the nitrogen oxides without dissociating in this process the molecular oxygen contained in the exhaust gas.

2. A method for the decomposition of nitrogen oxides in exhaust gases of internal combustion engines, and of diesel engines in particular, as claimed in claim 1, characterized in that the temperature of the exhaust gas is not more than 500°C, preferably not more than 400°C, on its introduction into the discharge chamber and that the stream through the discharge chamber is controlled according to engine output, preferably according to injected quantity and/or exhaust gas recirculation, thus leading to a mean specific output requirement of 0.2 to 2 Wh/m³, preferably of 0.5 to 1 Wh/m³.

3. A method as claimed in claims 1 to 2, characterized in that a high-frequency pulsating D.C. voltage field is produced in the discharge chamber and the high-frequency field amplitude which is synonymous with the D.C. voltage field is maintained during an impulse for at least 0.25 microseconds, preferably at least 0.5 microseconds.

4. An apparatus to perform the method as claimed in one of the claims 1 to 3, with at least two mutually opposite electrodes (33, 16) which are arranged in a discharge chamber which is open at either face side and is limited by side walls, with at least one electrode being connected with a high D.C. voltage source and at least one electrode with earth, characterized in that the voltage of the high D.C. voltage source is adequately chosen for a field strength of between 5 kV/cm and 20 kV/cm.

5. An apparatus as claimed in claim 4, characterized in that the electrode acting as discharge electrode (33) is cylindrical and a cylindrical discharge chamber (31) is arranged around the same which is preferably limited by a cylindrical high-voltage electrode (36) (fig. 4).

6. An apparatus as claimed in claim 5, characterized in that the cylindrical discharge electrode (33) is held by two annular honeycomb bodies (32; 32') which are flowed through by the exhaust gas and are made of densely burnt ceramic material.

7. An apparatus as claimed in one of the preceding claims, characterized in that the discharge electrode (33) is provided with a ceramic coating with a very coarse surface structure whose volume resistance is between 10⁵ and 10⁹ ohm.cm², preferably between between 10⁶ and 10⁸ ohm.cm².

8. An apparatus as claimed in one of the preceding claims, characterized in that on the insulating coating of the discharge electrode (33) there is applied a very coarse, non-contiguous and non-conductive coating (58) made of a metal, preferably titanium, tungsten, vanadium, molybdenum or alloys of the aforementioned metals, in form of coarse-grained, pointed or crystalline structures (fig. 6).

9. An apparatus as claimed in one of the preceding claims, characterized in that the counter electrode (36) and/or the discharge electrode (33) are arranged as a ceramic tube whose specific resistance is between 10⁵ and 10⁹ ohm.cm, preferably between 10⁶ and 10⁸ ohm.cm.

10. An apparatus as claimed in one of the preceding claims, characterized in that the ceramic material of the counter electrode (36) and/or the discharge electrode (33) is doped with an ion-forming substance, preferably Na, K or NaKO.

## Revendications

1. Procédé de décomposition d'oxydes d'azote dans les gaz d'échappement de moteurs à combustion, notamment de moteurs diesel, dans lequel le gaz d'échappement est introduit dans un espace de décharge et des électrons sont générés dans cet espace de décharge, caractérisé en ce que des électrons sont produits seulement dans une partie des délimitations de l'espace de décharge, une intensité de champ allant de 5 kV/cm à 20 kV/cm, de préférence de 10 kV/cm à 15 kV/cm étant générée dans la plus grande partie de cet espace de décharge en tenant compte de la charge d'espace, et en ce que l'intensité du champ dans l'espace de décharge est régulée de telle sorte que les électrons reçoivent une énergie suffisante pour réaliser une dissociation des oxydes d'azote sans toutefois dissocier l'oxygène moléculaire contenu dans le gaz d'échappement.

2. Procédé de décomposition d'oxydes d'azote dans les gaz d'échappement de moteurs à combustion, notamment de moteurs diesel, caractérisé en ce que température du gaz d'échappement lors de son introduction n'étant pas supérieure à 500 °C, de préférence pas supérieure à 400 °C, et en ce que le courant qui traverse cet espace de décharge est régulé en fonction de la puissance du moteur, de préférence en fonction de la quantité d'injection et/ou du recyclage des gaz d'échappement, de manière à obtenir une puissance spécifique nécessaire moyenne de 0,2 à 2 Wh/m3, de préférence de 0,5 à 1 Wh/m3.

3. Procédé selon les revendications 1 à 2, caractérisé en ce qu'un champ continu pulsé à haute fréquence est généré dans l'espace de décharge et en ce que l'amplitude du champ à haute fréquence et de même sens que le champ continu est maintenue pendant une impulsion d'au moins 0,25 microseconde, de préférence d'au moins 0,5 microseconde.

4. Dispositif pour réaliser le procédé selon l'une des revendications 1 à 3, avec au moins deux électrodes (33, 16) disposées face à face dans un espace de décharge ouvert à ses deux extrémités et délimité par des parois latérales, une électrode au moins étant reliée à une source de tension haute fréquence et une électrode au moins étant reliée à la masse, caractérisé en ce que la tension de la source de tension haute fréquence est choisie suffisante pour produire une intensité de champ de 5 kV/cm à 20 kV/cm.

5. Dispositif selon la revendication 4, caractérisé en ce que l'électrode faisant fonction d'électrode de décharge (33) est de forme cylindrique et en ce qu'un espace de décharge (31) de forme annulaire de préférence délimité par une électrode haute tension (36) de forme cylindrique est disposé autour d'elle.

6. Dispositif selon la revendication 5, caractérisé en ce que l'électrode de décharge (33) de forme cylindrique est maintenue par deux corps alvéolaires de forme annulaire (32, 32') en céramique densifiée par cuisson qui sont traversés par le gaz d'échappement.

7. Dispositif selon l'une quelconque des revendications précédentes, caractérisé en ce que l'électrode de décharge (33) présente un revêtement céramique avec une structure de surface très grossière dont la résistance interne est comprise entre 10⁵ et 10⁹ ohm.cm², de préférence entre 10⁶ et 10⁸ ohm.cm².

8. Dispositif selon l'une quelconque des revendications précédentes, caractérisé en ce qu'un revêtement non conducteur, discontinu très grossier (58) en métal, de préférence de titane, du tungstène, du molybdène ou des alliages de ceux-ci est déposé sur le revêtement isolant de l'électrode de décharge (33) sous la forme de structures pointues ou cristallines à grain grossier (figure 6).

9. Dispositif selon l'une quelconque des revendications précédentes, caractérisé en ce que la contre-électrode (36) et/ou l'électrode de décharge (33) se présentent sous la forme d'un tube céramique dont la résistance spécifique est comprise entre 10⁵ et 10⁹ ohm.cm, de préférence entre 10⁶ et 10⁸ ohm.cm.

10. Dispositif selon l'une quelconque des revendications précédentes, caractérisé en ce que le matériau céramique de la contre-électrode (36) et/ou de l'électrode de décharge (33) est dopé avec une substance ionisante, de préférence du Na, du K ou du NaKO.
